# NEUE EUROPÄISCHE PATENTSCHRIFT

(11) **EP 2 915 422 B2**
(45) Veröffentlichungstag und Bekanntmachung des Hinweises auf die Entscheidung über den Einspruch: **30.11.2022**
(45) Hinweis auf die Patenterteilung: 14.11.2018
(21) Anmeldenummer: 14196705.9
(22) Anmeldetag: 08.12.2014
(51) Int. Cl.: A01D 41/127

(54) **Landwirtschaftliche Arbeitsmaschine**
Agricultural work machine
Machine agricole

(30) Priorität: 03.03.2014 DE 102014102789
(43) Veröffentlichungstag der Anmeldung: 09.09.2015
(73) Patentinhaber: CLAAS Selbstfahrende Erntemaschinen GmbH, 33428 Harsewinkel (DE)
(72) Erfinder: Brune, Markus, 33428 Harsewinkel (DE); Diekhans , Dr., Norbert, 33335 Gütersloh (DE); Middelberg, René, 49080 Osnabrück (DE); Claussen, Frank, 33428 Greffen (DE)
(74) Vertreter: CLAAS Gruppe

(56) Entgegenhaltungen:
- EP-A1- 0 908 087
- EP-A1- 0 960 557
- EP-A1- 1 243 174
- EP-A1- 1 454 519
- EP-A2- 1 266 558
- EP-A2- 2 057 883
- DE-A1- 1 917 670
- DE-A1-102006 006 938
- DE-A1-102008 017 671
- DE-A1-102009 027 455
- DE-C2- 19 807 145
- US-A- 5 343 761
- US-A- 5 855 108
- L. J. BRIZGIS et al.: "Automatic Cylinder-Speed Control for Combines", Transactions of the ASAE, 1980, pages 1066-1075,

## Beschreibung

Die vorliegende Erfindung betrifft eine landwirtschaftliche Arbeitsmaschine gemäß dem Oberbegriff von Anspruch 1.

Landwirtschaftliche Arbeitsmaschinen, zu denen insbesondere selbstfahrende Erntemaschinen wie Mähdrescher zählen, weisen regelmäßig verschiedene Arbeitsgeräte auf, die bei der Verarbeitung von Erntegut mit wechselnden Parametern betrieben werden können. Die Einstellung dieser Parameter wird auch als Maschinenparametereinstellung bezeichnet. Für einen optimalen Betrieb empfiehlt es sich, die Maschinenparametereinstellung in Abhängigkeit von verschiedenen Randbedingungen einzustellen, wozu insbesondere die Art, Menge und Beschaffenheit des Bestands im Feld bzw. des Erntegut zählt.

Eine bedeutsame solche Randbedingung stellt die Feuchte des Ernteguts im Erntegutstrom insgesamt dar, welche im Wesentlichen durch die Feuchtigkeit des Strohs - Strohfeuchte bestimmt wird. Eine genaue Bestimmung der Feuchtigkeit des Ernteguts ist für eine optimale Einstellung der Maschinenparameter sehr hilfreich.

Aus dem Stand der Technik ist es einerseits bekannt, die Feuchtigkeit des Kornguts zu ermitteln, nachdem das Korngut bereits von dem Erntegut im Übrigen abgeschieden wurde. Die Feuchtigkeit des Kornguts erlaubt aber nicht immer eine hinreichend präzise Auskunft über die Feuchtigkeit des Ernteguts, da sie in der Regel nicht die bestimmende Größe für die Feuchtigkeit des Ernteguts darstellt.

Aus der EP 1 576 869 ist es bekannt, die Feuchtigkeit des Ernteguts durch einen im Einzugskanal eines Mähdreschers angeordneten Feuchtigkeitssensors zu ermitteln. Auf diese Weise kann laufend und zeitnah zur Aufnahme des Ernteguts durch die landwirtschaftliche Arbeitsmaschine die Feuchtigkeit des Ernteguts ermittelt und auf sie reagiert werden.

Nachteilig an diesem Stand der Technik ist, dass speziell bei einer Ausbildung des Feuchtigkeitssensors als kapazitiver Sensor die Messung der Feuchtigkeit ungenau sein kann. Das liegt daran, dass ein solcher Sensor im Wesentlichen die gesamte Menge des an ihm vorbeigeführten Wassers misst und ermittelt. Diese Gesamtwassermenge ist aber nicht nur von der relativen Feuchtigkeit des Ernteguts abhängig, sondern auch von der absolut aufgenommenen Menge an Erntegut zum Zeitpunkt der Messung. Folglich wird die gemessene Feuchtigkeit bei einer höheren Durchsatzmenge des Ernteguts häufig nach oben verfälscht und entsprechend bei einer niedrigen Durchsatzmenge ggf. nach unten.

Aus der EP 2 057 883 ist eine Leitwertsensor ausgeführte Feuchtesensoranordnung bekannt geworden, die in einer bevorzugten Ausführungsform auch den Gutdurchsatz und/oder die Schichthöhe des von dem Feuchtesensor zu detektierenden Gutstromes berücksichtigt. Da Leitwertsensoren zur Detektion der Feuchte eines Gutes dieses berühren müssen, wird hier vorgeschlagen, stromdurchflossenen Elektroden direkte in den mit hoher Gutgeschwindigkeit bewegten Gutstrom hineinragen zu lassen. Ausgehend von diesem Stand der Technik besteht die Aufgabe der Erfindung darin, eine landwirtschaftliche Arbeitsmaschine so weiterzuentwickeln, dass eine genauere Bestimmung der Feuchtigkeit im Erntegut genauer ist.

Das genannte Problem wird bei einer landwirtschaftlichen Arbeitsmaschine mit den Merkmalen des Oberbegriffs von Anspruch 1 durch die Merkmale des kennzeichnenden Teils von Anspruch 1 gelöst.

Wesentlich für die Erfindung ist die Erkenntnis, dass bei einer solchen landwirtschaftlichen Arbeitsmaschine häufig auch die aktuell aufgenommene Durchsatzmenge des Ernteguts sensorisch erfasst wird. Speziell ist ein Schichthöhensensor vorgesehen, welcher im Bereich eines Einzugs und insbesondere am Schrägförderer den aktuellen Durchsatz an aufgenommenem Erntegut bestimmt. Hier ist nun erkannt worden, dass diese Bestimmung der aktuellen Durchsatzmenge dazu verwendet werden kann, die Messung der Feuchtigkeit des aufgenommenen Ernteguts entsprechend zu korrigieren. Damit kann der wie oben beschriebene verfälschende Einfluss der aufgenommenen Durchsatzmenge auf die gemessene Feuchtigkeit korrigiert werden, sodass ein genauerer Wert der Feuchtigkeit für die Maschinenparametereinstellung zur Verfügung steht.

Der Zusammenhang zwischen der bestimmten Durchsatzmenge und einer Anpassung der gemessenen Feuchtigkeit kann durch eine Funktion angegeben werden, die durch die bevorzugte Ausgestaltung des Unteranspruchs 3 beschrieben wird.

Die vorschlagsgemäße Lösung erlaubt es auch, dem Phänomen Rechnung zu tragen, dass unterhalb einer bestimmten Durchsatzmenge an Erntegut die Erfassung der Feuchtigkeit sehr ungenau wird. Daher schlägt der Unteranspruch 4 vor, in so einem Fall den zuletzt ermittelten, korrigierten Feuchtigkeitswert weiterzubehalten, bis durch eine Zunahme des aufgenommenen Erntegutes wieder eine genauere Messung möglich ist.

Umgekehrt ist es so, dass ab dem Überschreiten einer bestimmten Durchsatzmenge kein oder jedenfalls kein wesentlicher Zusammenhang mehr zwischen der Durchsatzmenge und der gemessenen Feuchtigkeit besteht, sodass in diesem Bereich keine Korrektur mehr notwendig ist. Dies ist Gegenstand des Unteranspruchs 6.

Bevorzugte Anordnungsorte an der landwirtschaftlichen Arbeitsmaschine werden in dem Anspruch 7 beschrieben.

Die Unteransprüche 8 bis 11 beschreiben, wie die gemessene Feuchtigkeit des Ernteguts die Steuerung der Arbeitsgeräte der Arbeitsmaschine vorteilhaft beeinflussen könnte.

Speziell der Unteranspruch 12 berücksichtigt den Umstand, dass die gemessene Feuchtigkeit des Ernteguts auch zur Optimierung einer Überlastschutzfunktion des Dreschwerks eines Mähdreschers verwendet werden kann.

Schließlich betrifft der Anspruch 13 eine Weiterverarbeitung der gemessenen Feuchtigkeit des Ernteguts, welche sogar jenseits der landwirtschaftlichen Arbeitsmaschine selbst genutzt werden kann, indem nämlich die gemessene Feuchtigkeit des Ernteguts mit der jeweiligen Position verknüpft wird, an der diese Feuchtigkeit des Ernteguts gemessen wurde, sodass die Verteilung der Feuchtigkeit des Ernteguts geografisch auf das Bestandsfeld abgebildet werden kann. Diese Informationen sind unter wirtschaftlichen Gesichtspunkten sehr bedeutsam und erlauben dann eine verbesserte landwirtschaftliche Nutzung des Bestandsfelds.

Weitere Einzelheiten, Merkmale, Ziele und Vorteile der vorliegenden Erfindung werden nachfolgend anhand der Zeichnung eines bevorzugten Ausführungsbeispiels erläutert. In der Zeichnung zeigt
- Fig. 1: eine schematische Seitenansicht eines Mähdreschers als vorschlagsgemäße landwirtschaftliche Arbeitsmaschine,
- Fig. 2: eine beispielhafte Korrekturkurve anhand welcher die gemessene Feuchtigkeit des Ernteguts in Abhängigkeit von der Durchsatzmenge nachkorrigiert werden kann,
- Fig. 3: eine Draufsicht auf einen Schrägförderer des vorschlagsgemäßen Mähdreschers der Fig. 1,
- Fig. 4: ein Flussdiagramm, welches beispielhaft die Ansteuerung von Arbeitsgeräten des Mähdreschers der Fig. 1 in Abhängigkeit von der gemessenen Feuchtigkeit des Ernteguts darstellt und
- Fig. 5: ein Flussdiagramm, welches eine vorschlagsgemäße Nachkorrektur des Gutfeuchtesignals in Abhängigkeit einer bestimmten Durchsatzmenge darstellt.

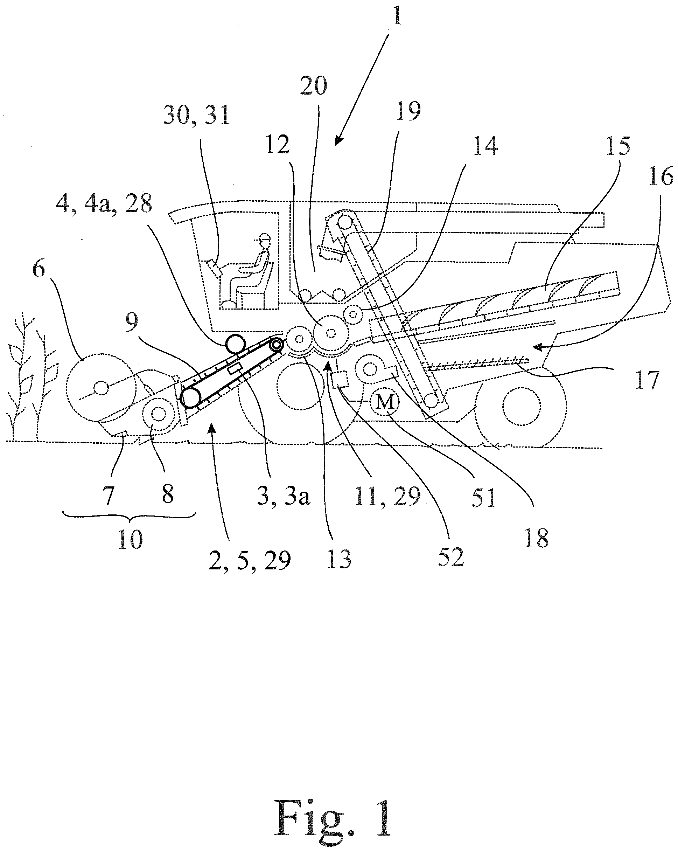

Die in der Fig. 1 dargestellte vorschlagsgemäße landwirtschaftliche Arbeitsmaschine, bei der es sich hier beispielhaft um einen Mähdrescher 1 handelt, ist zur Verarbeitung von Erntegut eingerichtet und umfasst eine Einzugsanordnung 2 zum Aufnehmen des Ernteguts, eine Feuchtigkeitssensoranordnung 3 zur Messung einer Feuchtigkeit des aufgenommenen Ernteguts und zur Erzeugung eines auf der gemessenen Feuchtigkeit basierenden Gutfeuchtesignals sowie eine Durchsatzsensoranordnung 4, bei der es sich vorzugsweise um eine Schichthöhensensoranordnung 4a handelt, zur Bestimmung einer Durchsatzmenge des aufgenommenen Ernteguts.

Die vorschlagsgemäße landwirtschaftliche Arbeitsmaschine ist nun derart ausgebildet, dass das Gutfeuchtesignal basierend auf der bestimmten Durchsatzmenge nachkorrigiert wird. Ein Nachkorrigieren in diesem Sinne kann eine beliebige Anpassung des Gutfeuchtesignals umfassen, welche von der bestimmten Durchsatzmenge abhängig ist. Diese Anpassung kann sowohl durch eine prozentuale Anpassung, etwa durch eine Multiplikation, durch die Addition oder Subtraktion eines Verschiebungswertes oder durch das Zuweisen eines Festwertes an das Gutfeuchtesignal geschehen. Dieses Nachkorrigieren kann auch nur für einen bestimmten Wertebereich entweder der gemessenen Feuchtigkeit oder der bestimmten Durchsatzmenge gelten und somit außerhalb eines dieser Bereiche entfallen. Es ist also nicht notwendig, dass jederzeit unter allen Bedingungen das Gutfeuchtesignal durch die Nachkorrektur verändert wird, wozu unten stehend noch erläuternde Beispiele folgen. Das Nachkorrigieren des Gutfeuchtesignals kann sowohl das Ersetzen des vorherigen Gutfeuchtesignals als auch das Erzeugen eines neuen, auf dem ursprünglichen Gutfeuchtesignal basierenden Gutfeuchtesignals, welches die Nachkorrektur berücksichtigt, umfassen.

Bei der Einzugsanordnung kann es sich um eine Vorsatzanordnung 5 handeln, welche wie in der Fig. 1 dargestellt eine Haspel 6, Messerbalken 7 und eine Einzugsschnecke 8 umfasst. Die Vorsatzanordnung umfasst ferner ebenso einen Schrägförderer 9. Die Haspel 6, die Messerbalken 7 sowie die Einzugsschnecke 8 können hier zusammengefasst als Schneidwerk 10 bezeichnet werden, sodass das von dem Schneidwerk 10 abgeschnittene und eingezogene Erntegut als Erntegutstrom von dem Schrägförderer 9 zur weiteren Verarbeitung im Mähdrescher 1 weitergefördert wird. Somit wird das Erntegut mittels der Einzugsanordnung 2 aufgenommen.

Von dem Schrägförderer 9 gelangt das aufgenommene Erntegut zum Dreschwerk 11, welches die Dreschtrommel 12 und den Dreschkorb 13 umfasst. Fördertechnisch dem Dreschwerk 2 nachgelagert ist eine Umlenktrommel 14, über welche der Erntegutstrom in die Trenneinrichtung 15 zum Abscheiden freier beweglicher Körner gelangt. Dieser folgt eine Reinigungsvorrichtung 16 mit ein oder mehreren Siebebenen 17 und einem Gebläse 18. Weiter nachgelagert sind wie ebenfalls in der Fig. 1 dargestellt, ein Kornelevator 19 und ein Korntank 20. Bevorzugt ist es, dass das Gutfeuchtesignal im Wesentlichen laufend erzeugt wird. Dies bedeutet, dass das Gutfeuchtesignal entweder kontinuierlich oder jedenfalls mit einem geringen Zeitabstand zwischen den Erfassungszeitpunkten erzeugt wird. Alternativ oder zusätzlich gilt die laufende Erzeugung auch für die Durchsatzmenge. Somit kann das Gutfeuchtesignal online und damit quasi in Echtzeit erzeugt und die Durchsatzmenge ebenfalls quasi in Echtzeit bestimmt werden. Aus beidem zusammen ergibt sich bevorzugt, dass das Gutfeuchtesignal im Wesentlichen laufend basierend auf der bestimmten Durchsatzmenge nachkorrigiert wird. Damit ist auch das nachkorrigierte Gutfeuchtesignal jederzeit aktuell.

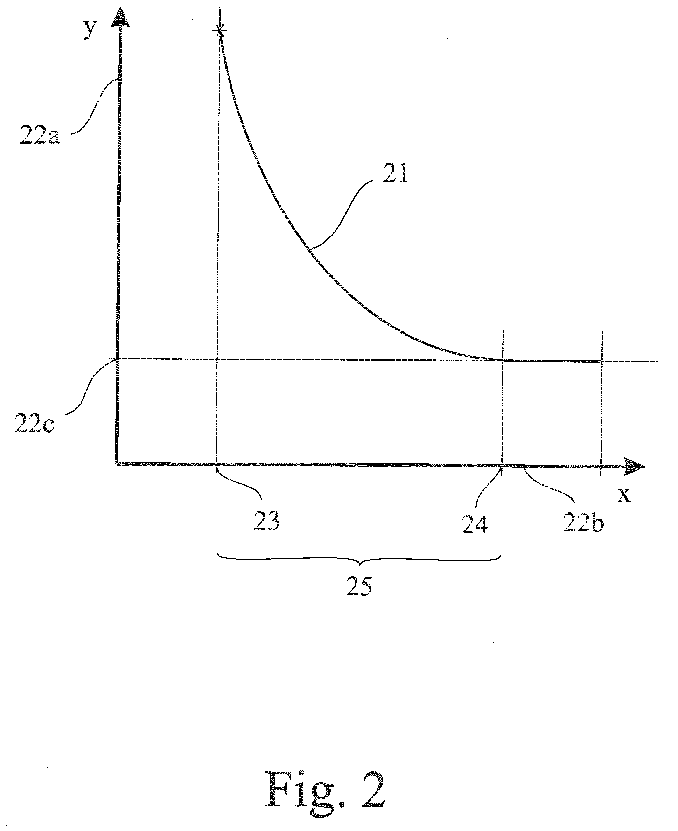

Erfindungsgemäß wird das Gutfeuchtesignal basierend auf der bestimmten Durchsatzmenge mittels einer Durchsatzkorrekturfunktion nachkorrigiert. Eine solche Durchsatzkorrekturfunktion kann auch durch eine Korrekturkurve, wie sie in der Fig. 2 dargestellt wird, gegeben sein. In diesem speziellen Fall wird ein Korrekturfaktor 21, mit welchem das Gutfeuchtesignal multipliziert wird, gemäß dem Wert entlang der y-Achse 22a abgelesen und in Abhängigkeit von der Durchsatzmenge bestimmt, welche auf der x-Achse 22b abgetragen wird. In diesem Fall wird bei einer niedrigeren Durchsatzmenge ein Korrekturfaktor größer Eins angelegt, welcher mit zunehmender Durchsatzmenge kleiner wird. Gleichermaßen wäre es alternativ bei einer anderen Skalierung des Gutfeuchtesignals möglich, bei einer niedrigen Durchsatzmenge einen Korrekturfaktor von Eins anzusetzen und bei einer größeren Durchsatzmenge dann einen Korrekturfaktor, welcher kleiner als Eins ist. Der Korrekturfaktor Eins ist in der Fig. 2 als Einheitswert 22c gekennzeichnet.

Denkbar wäre auch, eine Flächenkurve als Durchsatzkorrekturfunktion zu bilden, wobei dann der Korrekturfaktor sowohl von der bestimmten Durchsatzmenge als auch von dem - noch unkorrigierten - Gutfeuchtesignal abhängig ist. Im Ergebnis wäre also ein Korrekturfaktor anzulegen, welcher nicht nur nicht wie beim Beispiel der Fig. 2 von der gemessenen Durchsatzmenge abhängig ist, sondern ebenso von der gemessenen Feuchtigkeit abhängt.

Auch die Fruchtart des aufgenommenen Ernteguts beeinflusst die gemessene Feuchtigkeit. Um dies zu berücksichtigen ist bevorzugt vorgesehen, dass das Gutfeuchtesignal auch basierend auf einer Fruchtartbestimmung nachkorrigiert wird. Diese Fruchtartbestimmung kann auf einer Erfassung der Fruchtart durch Sensoren oder auf einer entsprechenden Bedienereingabe beruhen.

Um bei einer zu geringen Durchsatzmenge ein verfälschtes Ergebnis zu vermeiden, ist bevorzugt vorgesehen, dass beim Unterschreiten eines Mindestdurchsatzes 23 durch die bestimmte Durchsatzmenge das Gutfeuchtesignal auf einen Wert des Gutfeuchtesignals vor Unterschreiten des Mindestdurchsatzes nachkorrigiert wird. Dieser Zusammenhang ist auch aus der Fig. 2 zu erkennen, bei der unterhalb des Mindestdurchsatzes 23 keine Veränderung des Gutfeuchtesignals durch die Durchsatzkorrekturfunktion mehr eintritt. Vielmehr wird der zuletzt ermittelte Wert des Gutfeuchtesignals - unter Berücksichtigung der Nachkorrektur - beibehalten. Daher ist es weiter bevorzugt, dass in so einem Fall das Gutfeuchtesignal auf dem Wert des Gutfeuchtesignals vor Unterschreiten des Mindestdurchsatzes festgehalten wird.

Umgekehrt ist es bevorzugt, dass bei Überschreiten eines Höchstdurchsatzes 24 durch die bestimmte Durchsatzmenge das Gutfeuchtesignal durch die Nachkorrektur im Wesentlichen unverändert bleibt. In der Fig. 2 ist dieser Zusammenhang so dargestellt, dass oberhalb des Höchstdurchsatzes 24 die Durchsatzkorrekturfunktion einen in diesem Bereich konstanten Wert Eins entsprechend dem Einheitswert 22c aufweist. Aus dem Mindestdurchsatz 23 und dem Höchstdurchsatz 24 ergibt sich wie ebenfalls in der Fig. 2 dargestellt ein Korrekturbereich 25 zwischen diesen beiden Werten. Hier ist es bevorzugt vorgesehen, dass bei einer bestimmten Durchsatzmenge innerhalb des Korrekturbereichs 25 das Gutfeuchtesignal so nachkorrigiert wird, dass eine von der Feuchtigkeitssensoranordnung 3 gemessene Feuchtigkeit des aufgenommenen Ernteguts, bei der es sich insbesondere um eine absolute Feuchtigkeit des aufgenommenen Ernteguts handeln kann, insgesamt auf die bestimmte Durchsatzmenge bezogen wird. Auf diese Weise wird ein nachkorrigiertes Gutfeuchtesignal erhalten, welches eine prozentuale Feuchtigkeit angibt. Erfindungsgemäß ist entsprechend, dass wie dargestellt der Korrekturbereich 25 zwischen dem Höchstdurchsatz 24 und dem Mindestdurchsatz 23 liegt.

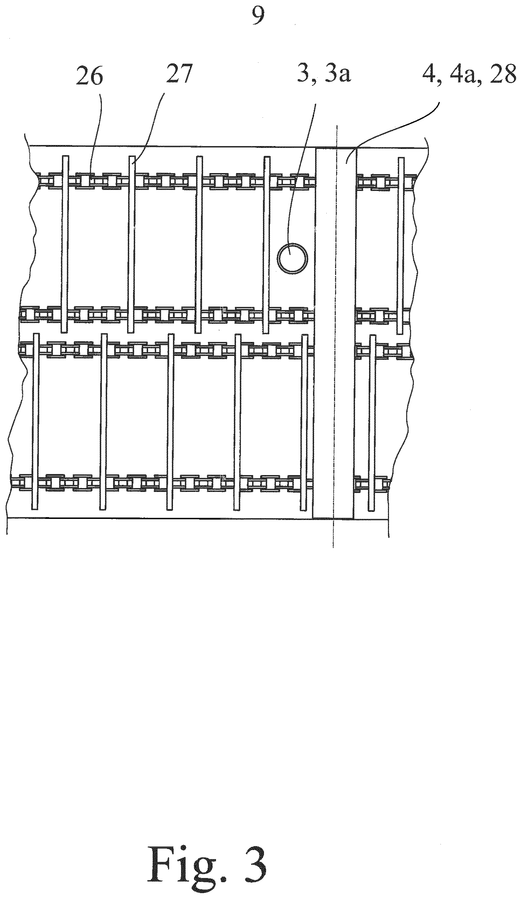

Bevorzugt ist es ebenso, dass die Feuchtigkeitssensoranordnung 3 sowie alternativ oder zusätzlich die Schichthöhensensoranordnung 4a an der Einzugsanordnung 2 und insbesondere in einem Einzugskanal der Einzugsanordnung 2 angeordnet ist. Dies ist beispielhaft in der Fig. 3 dargestellt, welche eine Draufsicht auf den Schrägförderer 9 des Mähdreschers 1 der Fig. 1 wiedergibt. Zu erkennen sind die Rollenketten 26 mit den Einzugsleisten 27. Eine Schichthöhenwalze 28 ermöglicht die Ermittlung der Durchsatzmenge durch die bereits erwähnte Schichthöhensensoranordnung 4a, deren Bestandteil sie bildet. Der Einzugskanal wird also im Wesentlichen in diesem Abschnitt durch die gezeigte obere Seite des Schrägförderers 9 gebildet. An dem Schrägförderer 9 ist auch die Feuchtigkeitssensoranordnung 3 angeordnet.

Erfindungsgemäß ist die Feuchtigkeitssensoranordnung 3 zur berührungslosen Messung der Feuchtigkeit des aufgenommenen Ernteguts eingerichtet. Die Feuchtigkeitssensoranordnung 3 umfasst einen kapazitiven Sensor 3a. Andere mögliche Arten von Sensoren für diese Feuchtigkeitssensoranordnung 3, welche ebenfalls berührungslos arbeiten, sind Nahinfrarotsensoren, wobei hier insbesondere Konstruktionen mit einfachen Fotodioden sowie zwei oder drei Sendedioden mit festen Wellenlängen infrage kommen. Möglich sind auch Sensoren basierend auf einem Mikrowellenverfahren oder einem TDR-Verfahren, also einem Time-Domain-Reflectometry-Verfahren.

Weiter ist es bevorzugt, dass die landwirtschaftliche Arbeitsmaschine Arbeitsgeräte 29 umfasst, zu denen insbesondere ein oder mehrere aus der Gruppe mit dem Dreschwerk 11, der Vorsatzanordnung 5, der Trenneinrichtung 15 und der Reinigungsvorrichtung 16 zählen.

Bevorzugt umfasst die landwirtschaftliche Arbeitsmaschine auch eine Steueranordnung 30 zum Steuern der Arbeitsgeräte 29, wobei hier vorgesehen ist, dass die Steueranordnung 30 die Arbeitsgeräte 29 basierend auf dem Gutfeuchtesignal ansteuert. Dies kann insbesondere dazu dienen, die Ausdruschgüte oder den momentanen Dieselverbrauch zu optimieren. Das Ansteuern der Arbeitsgeräte 29 kann vorzugsweise dergestalt erfolgen, dass die Steueranordnung 31 die Arbeitsgeräte 30 basierend auf dem Gutfeuchtesignal regelt.

Bei der Steueranordnung 30 kann es sich auch, gemäß dem Ausführungsbeispiel der Fig. 1, um eine elektronische Zentraleinheit 31 handeln, die z. B. auch eine elektronische Bedienoberfläche für einen Benutzer zur Verfügung stellt. Vorteile ergeben sich auch, wenn die Steueranordnung 30 Maschineneinstellautomaten aufweist, welche jeweils einem Arbeitsgerät 29 zur Ansteuerung des Arbeitsgerätes zugeordnet sind und dass die Steueranordnung 31 Betriebsparameter der Maschineneinstellautomaten basierend auf dem nachkorrigierten Gutfeuchtesignal bestimmt. Diese Maschineneinstellautomaten können in Form einer Software verwirklicht werden, sodass z. B. alle diese Maschineneinstellautomaten im Rahmen einer entsprechenden Steuersoftware innerhalb der Steueranordnung 30, hier also der elektronischen Zentraleinheit 31, ablaufen. Einige oder alle diese Maschineneinstellautomaten können aber auch durch jeweils eine eigene Vorrichtung gebildet werden.

Bevorzugt ist vorgesehen, dass die Steueranordnung 30 basierend auf einer Änderung des Gutfeuchtesignals eine Steueraktivität zum Steuern eines Arbeitsgeräts 29 ausführt. Mit anderen Worten werden z. B. bestimmte Routinen zur Steuerung eines Arbeitsgeräts 29 aktiviert, wenn definierte Bedingungen des Gutfeuchtesignals eintreten. So ist es bevorzugt vorgesehen, dass die Steueranordnung 30 bei einem Ansteigen des Gutfeuchtesignals und insbesondere bei einem Überschreiten eines oberen Grenzwerts eine Ansteigaktivität zum Steuern eines Arbeitsgeräts 29 auslöst. Alternativ oder zusätzlich kann vorgesehen sein, dass die Steueranordnung 30 bei einem Absinken des Gutfeuchtesignals insbesondere bei einem Unterschreiten eines unteren Grenzwerts eine Absinkaktivität zum Steuern eines Arbeitsgeräts 29 auslöst.

Neben dieser jeweiligen Aktivität, die durch das Über- oder Unterschreiten eines jeweiligen oberen oder unteren Grenzwertes ausgelöst wird, kann auch die Feststellung einer ausreichend großen Veränderung innerhalb eines Zeitintervalls, also die Feststellung einer ausreichend großen Veränderungsrate, unabhängig von der Richtung der Veränderung einen solchen Vorgang auslösen. Daher ist es bevorzugt, dass die Steueranordnung 30 bei einem Überschreiten eines Veränderungsgrenzwertes durch eine Veränderungsrate des Gutfeuchtesignals eine Varianzaktivität zum Steuern eines Arbeitsgeräte 29 auslöst. Dabei kann das Auslösen einer solchen Varianzaktivität auch davon abhängig sein, dass die Veränderungsrate des Gutfeuchtesignals in eine bestimmte Richtung geht.

Die Ansteig-, Absink- oder Varianzaktivität kann dabei auch mehrere Arbeitsgeräte 29 betreffen. Es können auch verschiedenen Arbeitsgeräten 29 jeweils unterschiedliche obere oder untere Grenzwerte sowie Veränderungsgrenzwerte zugeordnet sein, wobei dann eine jeweilige Ansteig-, Absink- oder Varianzaktivität je nach betroffenem Arbeitsgerät 29 unterschiedlich ausgestaltet sein kann.

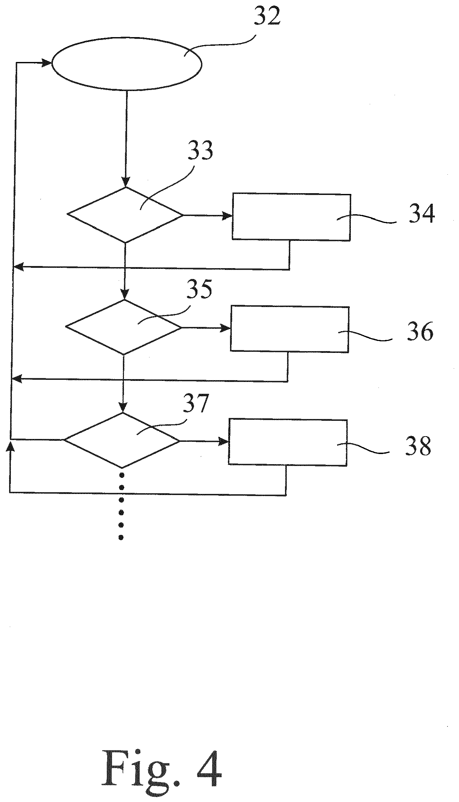

Ein Beispiel für die obigen Varianten ist in der Fig. 4 wiedergegeben, wo ausgehend von einem Startzustand 32 zunächst ein erster Prüfungsschritt 33 auf den obigen oberen Grenzwert durchgeführt wird, wobei im Falle, dass er überschritten wurde, ein erster Auslöseschritt 34 der Ansteigaktivität folgt. Falls der obere Grenzwert nicht überschritten wurde, wird in einem zweiten Prüfungsschritt 35 das Unterschreiten des unteren Grenzwertes überprüft, woraufhin im Falle des Unterschreitens in dem zweiten Auslöseschritt 36 das Auslösen der Absinkaktivität folgen kann. Ist auch dies nicht der Fall, folgt im letzten Prüfungsschritt 37 eine Ermittlung, ob der Veränderungsgrenzwert durch eine Veränderungsrate des Gutfeuchtesignals überschritten wurde. Ist das der Fall, wird die Varianzaktivität im im dritten Auslöseschritt 38. Dabei sind auch noch weitere, insbesondere nachfolgende Prüfungs- und entsprechende Auslösungsschritte denkbar.

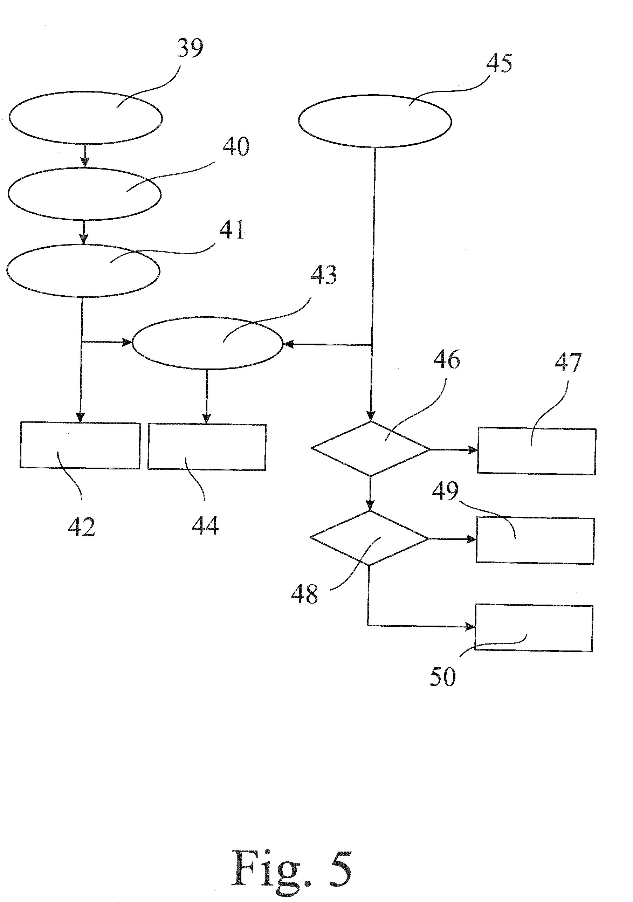

Ähnlich zeigt Fig. 5 ein Flussdiagramm der Nachkorrektur des Gutfeuchtesignals in dem Mähdrescher der Fig. 1. Zu Beginn wird in einem Gutfeuchteermittlungsschritt 39 die Feuchtigkeit des aufgenommenen Ernteguts von der Feuchtigkeitssensoranordnung 3 gemessen und darauf basierend das Gutfeuchtesignal erzeugt. Der nachfolgende Temperaturabgleichschritt 40 sieht eine Anpassung des Gutfeuchtesignals basierend auf einer gemessenen Umgebungstemperatur vor. Im darauffolgenden Fruchtartkorrekturschritt 41 wird das Gutfeuchtesignal basierend auf einer Fruchtartbestimmung nachkorrigiert. Alternativ kann, bei einer Nachkorrektur mittels einer Korrekturkurve, die Auswahl der Korrekturkurve auf der bestimmten Fruchtart basieren.

Das auf diese Weise ggf. angepasste, aber noch nicht einer vorschlagsgemäßen Nachkorrektur unterzogene Gutfeuchtesignal wird einerseits als Rohsignal 42 beibehalten. Andererseits wird das Gutfeuchtesignal aber auch im Nachkorrekturschritt 43 einer Nachkorrektur basierend auf der bestimmten Durchsatzmenge unterzogen, wie z. B. oben stehend anhand der Fig. 2 erklärt wurde, wodurch das schichthöhenbezogene Normsignal 44 erhalten wird. Diese Nachkorrektur ist, wie bereits beschrieben, abhängig von der bestimmten Durchsatzmenge des Gutfeuchtesignals, sodass zu der Bestimmung der Durchsatzmenge zeitgleich zum Gutfeuchteermittlungsschritt 39 im Schichthöhenmessschritt 45 die gemessene Schichthöhe von der Schichthöhensensoranordnung 4a empfangen wird und aus ihr die Durchsatzmenge bestimmt wird.

Im Untergrenzwertprüfschritt 46, welcher auf den Nachkorrekturschritt 43 folgt, wird ermittelt, ob die bestimmte Durchsatzmenge unter dem Mindestdurchsatz 23 liegt, wobei bejahendenfalls im Beibehaltungsschritt 47 das letzte gültige Gutfeuchtesignal - und zwar das Normsignal 44 nach der Nachkorrektur - vor Unterschreiten des Mindestdurchsatzes 23 als aktuell gültiges Gutfeuchtesignal behandelt wird.

Liegt keine Unterschreitung des Mindestdurchsatzes vor, so wird im Obergrenzwertprüfschritt 48 geprüft, ob stattdessen der Höchstdurchsatz durch die bestimmte Durchsatzmenge überschritten wurde. Falls ja, wird im Rohverarbeitungsschritt 49 das Rohsignal 42 als gültiges Gutfeuchtesignal übernommen, weil hier die Nachkorrektur - wie bereits festgestellt - nicht erforderlich ist bzw. zu einem zum Rohsignal 42 identischen Wert führen würde. Ist hingegen der Höchstdurchsatz nicht überschritten, befindet sich die bestimmte Durchsatzmenge im Korrekturbereich und es wird das nachkorrigierte Normsignal 44 im Korrekturverarbeitungsschritt 50 als gültiges Gutfeuchtesignal weiterverwendet, z. B. für die oben beschriebene Bestimmung von Betriebsparametern der Maschineneinstellautomaten.

Eine andere bevorzugte Anwendung des nachkorrigierten Gutfeuchtesignals im Zusammenhang mit einem Überlastschutz wird nachfolgend beschrieben. Hier ist bevorzugt, dass die Steueranordnung 30 beim Steuern der Arbeitsgeräte 29 insbesondere des Dreschwerks 11 einen Überlastschutz bereitstellt, wobei die Steueranordnung 30 beim Feststellen einer Überlast die Arbeitsgeräte 29 gemäß einer Überlastschutzroutine ansteuert. Ebenso ist bevorzugt vorgesehen, dass eine Empfindlichkeitsschwelle zum Feststellen der Überlast auf dem Gutfeuchtesignal basiert. Dies kann insbesondere dadurch verwirklicht werden, dass die landwirtschaftliche Arbeitsmaschine einen Antrieb 51 und eine Kupplung 52 zum Betreiben des Dreschwerks 11 aufweist und dass eine Schlupfschwelle der Kupplung 52 zum Feststellen der Überlast auf dem Gutfeuchtesignal basiert. Es wird also eine Überlast festgestellt, wenn der Schlupf der Kupplung 52, bei welcher es sich insbesondere um eine Riemenkupplung handeln kann, die Schlupfschwelle überschreitet. Hier kann z. B. vorgesehen sein, dass als Schlupfschwellen wahlweise 8 %, 13 % und 18 % Schlupf vorgesehen sein können, wobei die aktuell gültige Schlupfschwelle in Abhängigkeit vom Gutfeuchtesignal ausgesucht wird.

Eine andere Anwendung betrifft die Möglichkeit der Kornfeuchtekartierung. Dazu ist bevorzugt vorgesehen, dass die Steueranordnung 30 dazu eingereicht ist, das Gutfeuchtesignal für eine Kartierung zu protokollieren, wobei vorzugsweise die Steueranordnung 30 auch dazu eingerichtet ist, das Gutfeuchtesignal mit Positionsdaten der landwirtschaftlichen Arbeitsmaschine während der Aufnahme des Ernteguts in Bezug gesetzt wird und weiter insbesondere, das protokollierte Gutfeuchtesignal mit den bezogenen Positionsdaten der landwirtschaftlichen Arbeitsmaschine an eine entfernte Recheneinheit zu übertragen. Diese Übertragung kann insbesondere über eine Funkschnittstelle, z. B. für ein GSM-System, vorgenommen werden. Auf diese Weise ergeben sich wichtige Informationen für eine landwirtschaftliche Nachbearbeitung.

## Patentansprüche

1. Landwirtschaftliche Arbeitsmaschine, insbesondere Mähdrescher (1), zur Verarbeitung von Erntegut, umfassend eine Einzugsanordnung (2) zum Aufnehmen des Ernteguts, eine Feuchtigkeitssensoranordnung (3) zur Messung einer Feuchtigkeit des aufgenommenen Ernteguts und zur Erzeugung eines auf der gemessenen Feuchtigkeit basierenden Gutfeuchtesignals sowie eine Durchsatzsensoranordnung (4), bei der es sich um eine Schichthöhensensoranordnung (4a) handelt, zur Bestimmung einer Durchsatzmenge des aufgenommenen Ernteguts, wobei das Gutfeuchtesignal basierend auf der bestimmten Durchsatzmenge nachkorrigiert wird,
**dadurch gekennzeichnet,**
**dass** die Feuchtigkeitssensoranordnung (3) zur berührungslosen Messung der Feuchtigkeit des aufgenommenen Ernteguts eingerichtet ist und als kapazitiver Sensor (3a) ausgeführt ist und dass bei einer innerhalb eines Korrekturbereiches (25) bestimmten Durchsatzmenge das Gutfeuchtesignal so nachkorrigiert wird, dass eine von der Feuchtigkeitssensoranordnung (3) gemessene, absolute, Feuchtigkeit des aufgenommenen Ernteguts insgesamt auf die bestimmte Durchsatzmenge bezogen wird, und der Korrekturbereich (25) zwischen einem Höchstdurchsatz (24) und einem Mindestdurchsatz (23) liegt.

2. Landwirtschaftliche Arbeitsmaschine nach Anspruch 1, **dadurch gekennzeichnet, dass** das Gutfeuchtesignal im Wesentlichen laufend erzeugt wird und/oder die Durchsatzmenge im Wesentlichen laufend bestimmt wird, vorzugsweise, dass das Gutfeuchtesignal im Wesentlichen laufend basierend auf der bestimmten Durchsatzmenge nachkorrigiert wird.

3. Landwirtschaftliche Arbeitsmaschine nach Anspruch 1 oder 2, **dadurch gekennzeichnet, dass** das Gutfeuchtesignal basierend auf der bestimmten Durchsatzmenge mittels einer Durchsatzkorrekturfunktion nachkorrigiert wird.

4. Landwirtschaftliche Arbeitsmaschine nach einem der Ansprüche 1 bis 3, **dadurch gekennzeichnet, dass** das Gutfeuchtesignal auch basierend auf einer Fruchtartbestimmung nachkorrigiert wird.

5. Landwirtschaftliche Arbeitsmaschine nach einem der Ansprüche 1 bis 4, **dadurch gekennzeichnet, dass** bei einem Unterschreiten eines Mindestdurchsatzes (23) durch die bestimmte Durchsatzmenge das Gutfeuchtesignal auf einen Wert des Gutfeuchtesignals vor Unterschreiten des Mindestdurchsatzes (23) nachkorrigiert wird, vorzugsweise, auf dem Wert des Gutfeuchtesignals vor Unterschreiten des Mindestdurchsatzes (23) festgehalten wird.

6. Landwirtschaftliche Arbeitsmaschine nach einem der Ansprüche 1 bis 5, **dadurch gekennzeichnet, dass** bei einem Überschreiten eines Höchstdurchsatzes (24) durch die bestimmte Durchsatzmenge das Gutfeuchtesignal durch die Nachkorrektur im Wesentlichen unverändert bleibt.

7. Landwirtschaftliche Arbeitsmaschine nach einem der Ansprüche 1 bis 6, **dadurch gekennzeichnet, dass** die Feuchtigkeitssensoranordnung (3) und/oder die Schichthöhensensoranordnung (4a) an der Einzugsanordnung (2), vorzugsweise in einem Einzugskanal der Einzugsanordnung (2), angeordnet ist.

8. Landwirtschaftliche Arbeitsmaschine nach einem der Ansprüche 1 bis 7, **dadurch gekennzeichnet, dass** die landwirtschaftliche Arbeitsmaschine Arbeitsgeräte (29), insbesondere umfassend ein Dreschwerk (11) und/oder eine Vorsatzanordnung (5), und eine Steueranordnung (30) zum Steuern der Arbeitsgeräte (29) aufweist und dass die Steueranordnung (30) die Arbeitsgeräte (29) basierend auf dem Gutfeuchtesignal ansteuert, vorzugsweise, dass die Steueranordnung (30) die Arbeitsgeräte (29) basierend auf dem Gutfeuchtesignal regelt.

9. Landwirtschaftliche Arbeitsmaschine nach Anspruch 8, **dadurch gekennzeichnet, dass** die Steueranordnung (30) Maschineneinstellautomaten aufweist, welche jeweils einem Arbeitsgerät (29) zur Ansteuerung des Arbeitsgeräts (29) zugeordnet sind, und dass die Steueranordnung (30) Betriebsparameter der Maschineneinstellautomaten basierend auf dem nachkorrigierten Gutfeuchtesignal bestimmt.

10. Landwirtschaftliche Arbeitsmaschine nach Anspruch 8 oder 9, **dadurch gekennzeichnet, dass** die Steueranordnung (30) basierend auf einer Änderung des Gutfeuchtesignals eine Steueraktivität zum Steuern der Arbeitsgeräte (29) ausführt.

11. Landwirtschaftliche Arbeitsmaschine nach Anspruch 10, **dadurch gekennzeichnet, dass** die Steueranordnung (30) bei einem Ansteigen des Gutfeuchtesignals, insbesondere bei einem Überschreiten eines oberen Grenzwerts, eine Ansteigaktivität zum Steuern eines Arbeitsgeräts (29) auslöst und/oder dass die Steueranordnung (30) bei einem Absinken des Gutfeuchtesignals, insbesondere bei einem Unterschreiten eines unteren Grenzwerts, eine Absinkaktivität zum Steuern eines Arbeitsgeräts (29) auslöst und/oder dass die Steueranordnung (30) bei einem Überschreiten eines Veränderungsgrenzwerts durch eine Veränderungsrate des Gutfeuchtesignals eine Varianzaktivität zum Steuern eines Arbeitsgeräts (29) auslöst.

12. Landwirtschaftliche Arbeitsmaschine nach einem der Ansprüche 8 bis 11, **dadurch gekennzeichnet, dass** die Steueranordnung (30) beim Steuern der Arbeitsgeräte (29), insbesondere des Dreschwerks (11), einen Überlastschutz bereitstellt, wobei die Steueranordnung beim Feststellen einer Überlast die Arbeitsgeräte gemäß einer Überlastschutzroutine ansteuert, und dass eine Empfindlichkeitsschwelle zum Feststellen der Überlast auf dem Gutfeuchtesignal basiert, vorzugsweise, dass die landwirtschaftliche Arbeitsmaschine einen Antrieb (51) und eine Kupplung (52) zum Betreiben des Dreschwerks (11) aufweist und dass eine Schlupfschwelle der Kupplung (52) zum Feststellen der Überlast auf dem Gutfeuchtewert basiert.

13. Landwirtschaftliche Arbeitsmaschine nach einem der Ansprüche 9 bis 12, **dadurch gekennzeichnet, dass** die Steueranordnung (30) dazu eingerichtet ist, das Gutfeuchtesignal für eine Kartierung zu protokollieren, vorzugsweise, mit Positionsdaten der landwirtschaftlichen Arbeitsmaschine während der Aufnahme des Ernteguts in Bezug zu setzen, insbesondere, das protokollierte Gutfeuchtesignal mit den bezogenen Positionsdaten der landwirtschaftlichen Arbeitsmaschine, weiter insbesondere über eine Funkschnittstelle, an eine entfernte Recheneinheit zu übertragen.

## Claims

1. Agricultural working machine, in particular combine harvester (1), for processing crop material, comprising a feeder arrangement (2) for picking up the crop material, a moisture sensor arrangement (3) for measuring a moisture of the picked-up crop material and for generating a crop moisture signal based on the measured moisture and a throughput sensor arrangement (4), which is a layer height sensor arrangement (4a), for determining a throughput amount of the picked-up crop material, wherein the crop moisture signal is subsequently corrected based on the determined throughput amount,
**characterized in that**
the moisture sensor arrangement (3) is set up for contactless measurement of the moisture of the picked-up crop material and is designed as a capacitive sensor (3a) and **in that** with a throughput amount which is determined within a correction range (25) the crop moisture signal is subsequently corrected such that an absolute moisture of the picked-up crop material measured by the moisture sensor arrangement (3) is related overall to the determined throughput amount, and the correction range (25) is between a maximum throughput (24) and a minimum throughput (23).

2. Agricultural working machine according to claim 1, **characterized in that** the crop moisture signal is substantially continuously generated and/or the throughput amount is substantially continuously determined, preferably **in that** the crop moisture signal is subsequently corrected substantially continuously based on the determined throughput amount.

3. Agricultural working machine according to claim 1 or 2, **characterized in that** the crop moisture signal is subsequently corrected based on the determined throughput amount by means of a throughput correction function.

4. Agricultural working machine according to one of claims 1 to 3, **characterized in that** the crop moisture signal is also subsequently corrected based on a determination of the type of crop.

5. Agricultural working machine according to one of claims 1 to 4, **characterized in that** when the determined throughput amount falls below a minimum throughput (23) the crop moisture signal is subsequently corrected to a value of the crop moisture signal before the determined throughput amount fell below the minimum throughput (23), preferably is held at the value of the crop moisture signal before the determined throughput amount fell below the minimum throughput (23).

6. Agricultural working machine according to one of claims 1 to 5, **characterized in that** when the determined throughput amount exceeds a maximum throughput (24) the crop moisture signal remains substantially unchanged by the subsequent correction.

7. Agricultural working machine according to one of claims 1 to 6, **characterized in that** the moisture sensor arrangement (3) and/or the layer height sensor arrangement (4a) is arranged at the feeder arrangement (2), preferably in a feeder housing of the feeder arrangement (2).

8. Agricultural working machine according to one of claims 1 to 7, **characterized in that** the agricultural working machine has implements (29), in particular comprising a threshing mechanism (11) and/or a front attachment arrangement (5), and a control arrangement (30) for controlling the implements (29) and **in that** the control arrangement (30) actuates the implements (29) based on the crop moisture signal, preferably **in that** the control arrangement (30) regulates the implements (29) based on the crop moisture signal.

9. Agricultural working machine according to claim 8, **characterized in that** the control arrangement (30) has automatic machine setting means which are assigned in each case to an implement (29) for actuation of the implement (29), and **in that** the control arrangement (30) determines operating parameters of the automatic machine setting means based on the subsequently corrected crop moisture signal.

10. Agricultural working machine according to claim 8 or 9, **characterized in that** the control arrangement (30) performs a control activity for controlling the implements (29) based on a change in the crop moisture signal.

11. Agricultural working machine according to claim 10, **characterized in that** the control arrangement (30) triggers an increase activity for controlling an implement (29) in the case of an increase in the crop moisture signal, in particular when an upper limit value is exceeded, and/or **in that** the control arrangement (30) triggers a decrease activity for controlling an implement (29) in the case of a decrease in the crop moisture signal, in particular when it falls below a lower limit value, and/or **in that** the control arrangement (30) triggers a variation activity for controlling an implement (29) when a variation rate of the crop moisture signal exceeds a variation limit value.

12. Agricultural working machine according to one of claims 8 to 11, **characterized in that** the control arrangement (30) provides an overload protection when controlling the implements (29), in particular the threshing mechanism (11), wherein the control arrangement actuates the implements in accordance with an overload protection routine when an overload is detected, and **in that** a sensitivity threshold for detecting the overload is based on the crop moisture signal, preferably **in that** the agricultural working machine has a drive (51) and a clutch (52) for operating the threshing mechanism (11) and **in that** a slip threshold of the clutch (52) for detecting the overload is based on the crop moisture value.

13. Agricultural working machine according to one of claims 9 to 12, **characterized in that** the control arrangement (30) is set up to record the crop moisture signal for mapping, preferably to relate same to position data of the agricultural working machine during crop material pick-up, in particular to transfer the recorded crop moisture signal with the related position data of the agricultural working machine, further in particular via a radio interface, to a remote computing unit.

## Revendications

1. Machine de travail agricole, en particulier moissonneuse-batteuse (1), pour traiter du produit récolté, comprenant un agencement d'alimentation (2) pour ramasser le produit récolté, un agencement de capteur d'humidité (3) pour mesurer une humidité du produit récolté ramassé et pour générer un signal d'humidité de produit sur la base de l'humidité mesurée, ainsi qu'un agencement de capteur de débit (4), pour lequel il s'agit d'un agencement de capteur de hauteur de couche (4a), pour déterminer un débit du produit récolté ramassé, le signal d'humidité de produit étant corrigé ultérieurement sur la base du débit déterminé,
**caractérisée en ce que**
l'agencement de capteur d'humidité (3) est conçu pour mesurer sans contact l'humidité du produit récolté ramassé et est conformé en capteur capacitif (3a), et **en ce que**, pour un débit déterminé à l'intérieur d'une plage de correction (25), le signal d'humidité de produit est corrigé ultérieurement de façon qu'une humidité absolue du produit de récolte ramassé, mesurée par l'agencement de capteur d'humidité (3), soit globalement rapportée au débit déterminé et que la plage de correction (25) se trouve entre un débit maximal (24) et un débit minimal (23).

2. Machine de travail agricole selon la revendication 1, **caractérisée en ce que** le signal d'humidité de produit est généré sensiblement en continu et/ou le débit est déterminé sensiblement en continu, de préférence **en ce que** le signal d'humidité de produit est corrigé ultérieurement sensiblement en continu sur la base du débit déterminé.

3. Machine de travail agricole selon la revendication 1 ou 2, **caractérisée en ce que** le signal d'humidité de produit est corrigé ultérieurement sur la base du débit déterminé au moyen d'une fonction de correction de débit.

4. Machine de travail agricole selon une des revendications 1 à 3, **caractérisée en ce que** le signal d'humidité de produit est également corrigé ultérieurement sur la base d'une détermination de type de culture.

5. Machine de travail agricole selon une des revendications 1 à 4, **caractérisée en ce que**, en cas de soupassement d'un débit minimal (23) par le débit déterminé, le signal d'humidité de produit est corrigé ultérieurement vers une valeur de signal d'humidité de produit antérieure au soupassement du débit minimal (23), de préférence est maintenu à la valeur du signal d'humidité de produit antérieure au soupassement du débit minimal (23).

6. Machine de travail agricole selon une des revendications 1 à 5, **caractérisée en ce que**, en cas de surpassement d'un débit maximal (24) par le débit déterminé, le signal d'humidité de produit reste sensiblement inchangé par la correction ultérieure.

7. Machine de travail agricole selon une des revendications 1 à 6, **caractérisée en ce que** l'agencement de capteur d'humidité (3) et/ou l'agencement de capteur de hauteur de couche (4a) est disposé sur l'agencement d'alimentation (2), de préférence dans un canal d'alimentation de l'agencement d'alimentation (2).

8. Machine de travail agricole selon une des revendications 1 à 7, **caractérisée en ce que** la machine de travail agricole comporte des appareils de travail (29), en particulier incluant un système de battage (11) et/ou un équipement frontal (5), et un agencement de commande (30) pour commander les appareils de travail (29), et **en ce que** l'agencement de commande (30) commande les appareils de travail (29) sur la base du signal d'humidité de produit, de préférence **en ce que** l'agencement de commande (30) régule les appareils de travail (29) sur la base du signal d'humidité de produit.

9. Machine de travail agricole selon la revendication 8, **caractérisée en ce que** l'agencement de commande (30) comporte des automates de réglage de machine qui sont chacun associés à un appareil de travail (29) pour commander l'appareil de travail (29), et **en ce que** l'agencement de commande (30) détermine des paramètres d'exploitation des automates de réglage de machine sur la base du signal d'humidité de produit corrigé ultérieurement.

10. Machine de travail agricole selon la revendication 8 ou 9, **caractérisée en ce que** l'agencement de commande (30) effectue, sur la base d'une modification du signal d'humidité de produit, une activité de commande pour commander les appareils de travail (29).

11. Machine de travail agricole selon la revendication 10, **caractérisée en ce que** l'agencement de commande (30), en cas d'accroissement du signal d'humidité de produit, en particulier en cas de surpassement de la valeur limite supérieure, déclenche une activité d'accroissement pour commander un appareil de travail (29) et/ou **en ce que** l'agencement de commande (30), en cas de décroissement du signal d'humidité de produit, en particulier en cas de soupassement d'une valeur limite inférieure, déclenche une activité de décroissement pour commander un appareil de travail (29) et/ou **en ce que** l'agencement de commande (30), en cas de surpassement d'une valeur limite de variation par un taux de variation du signal d'humidité de produit déclenche une activité de variance pour commander un appareil de travail (29).

12. Machine de travail agricole selon une des revendications 8 à 11, **caractérisée en ce que** l'agencement de commande (30), lors de la commande des appareils de travail (29), en particulier du système de battage (11), assure une protection antisurcharges, l'agencement de commande commandant, en cas de constatation d'une surcharge, les appareils de travail selon une routine de protection antisurcharges, et **en ce qu'**un seuil de sensibilité pour constater la surcharge est basé sur le signal d'humidité de produit, de préférence **en ce que** la machine de travail agricole comporte un entraînement (51) et un accouplement (52) pour actionner le système de battage (11) et **en ce qu'**un seuil de glissement de l'accouplement (52) pour constater la surcharge est basé sur la valeur d'humidité du produit.

13. Machine de travail agricole selon une des revendications 9 à 12, **caractérisée en ce que** l'agencement de commande (30) est conçu de façon à consigner le signal d'humidité de produit pour une cartographie, de préférence pour le rapporter à des données de position de la machine de travail agricole pendant le ramassage du produit récolté, en particulier pour transmettre le signal d'humidité de produit consigné avec les données de position rapportées de la machine agricole, en particulier encore par l'intermédiaire d'une interface radio, à une unité de calcul distante.
